# FASCICULE DE BREVET EUROPEEN

(11) **EP 3 728 023 B1**
(45) Date de publication et mention de la délivrance du brevet: **08.09.2021**
(21) Numéro de dépôt: 19725370.1
(22) Date de dépôt: 24.05.2019
(51) Int. Cl.: B64C 3/44, B64C 9/22, B64C 3/50, B64C 9/02

(54) **AILE D'AERONEF COMPRENANT UN VOLET MOBILE DE BORD D'ATTAQUE GUIDE PAR UN DISPOSITIF SITUE A L'AVANT D'UN CAISSON DE VOILURE**
FLUGZEUGFLÜGEL MIT EINER BEWEGLICHEN VORDERKANTENKLAPPE, DIE VON EINER AN DER VORDERSEITE EINES FLÜGELKASTENS ANGEORDNETEN VORRICHTUNG GEFÜHRT WIRD
AIRCRAFT WING COMPRISING A MOBILE LEADING EDGE FLAP GUIDED BY A DEVICE LOCATED AT THE FRONT OF A WING BOX

(30) Priorité: 29.05.2018 BE 201805348
(43) Date de publication de la demande: 28.10.2020
(73) Titulaire: Sonaca S.A., 6041 Gosselies (BE)
(72) Inventeur: GODFROID, Xavier, 1435 MONT SAINT GUIBERT (BE)
(74) Mandataire: Brevalex
(86) Numéro de dépôt international: PCT/EP2019/063430
(87) Numéro de publication internationale: WO 2019/228917

(56) Documents cités:
- EP-A1- 1 972 547
- WO-A2-2013/000577
- US-A1- 2011 253 832

## Description

### DOMAINE TECHNIQUE

La présente invention se rapporte au domaine des ailes d'aéronef, du type comprenant un corps central fixe d'aile portant un ou plusieurs volets mobiles de bord d'attaque, également dénommés « *Slats* ».

Il est noté que l'invention s'applique à tous les types d'aéronef, comme une aile volante, un avion à moteur en queue de fuselage, un avion supersonique, etc.

### ETAT DE LA TECHNIQUE ANTERIEURE

Sur les aéronefs, chacune des deux ailes de la voilure est généralement équipée de volets mobiles hypersustentateurs, montés au bord d'attaque et au bord de fuite de l'aile.

De façon connue, les volets sont déployés pour les phases d'atterrissage et de décollage afin d'augmenter la portance à faible ou moyenne vitesse. Par ailleurs, en vol de croisière à grande vitesse, les volets mobiles sont rentrés pour limiter la résistance à l'avancement de l'aéronef. Toujours de façon connue de l'homme du métier, le déplacement et le guidage de chaque volet s'effectue à l'aide de moyens logés dans un corps central fixe d'aile, tel que cela ressort par exemple du document EP 0 818 387. Ces moyens permettent de déplacer et de guider chaque volet mobile de bord d'attaque selon une trajectoire habituellement en arc de cercle par rapport au corps central fixe d'aile, entre une position rentrée dans laquelle le volet épouse sensiblement le corps fixe, et une position déployée dans laquelle ce volet est déplacé vers l'avant. Cette trajectoire en arc de cercle du volet constitue la solution préférentiellement retenue lorsque ce volet est déplacé orthogonalement à la direction de corde de l'aile. D'autres mouvements peuvent néanmoins être observés lorsque le volet est déplacé selon une direction différente de celle de la corde, par exemple lorsqu'il est destiné à être déplacé parallèlement à la direction de vol.

Plus précisément, pour permettre le guidage en rotation du volet mobile, les solutions conventionnelles proposent des rails de guidage solidaires de ce volet, en forme d'arc de cercle correspondant à la trajectoire du volet en déplacement. Ces rails remplissent un simple rôle de guidage en rotation du volet, et/ou une fonction d'entraînement de ce dernier. Ils coopèrent avec des galets portés par le corps central fixe d'aile, et également avec des moyens de mise en mouvement du type à roues dentées, pour les rails d'entraînement.

Bien que cette configuration soit très répandue sur les ailes d'aéronef, elle requiert le passage des rails à travers le longeron avant du caisson de voilure. Le caractère pénétrant des rails de guidage et des rails d'entrainement rend inexploitable le volume du caisson de voilure balayé par ces rails. Ce volume inexploité pourrait par exemple être utilisé pour stocker davantage de carburant dans le caisson de voilure, et ainsi augmenter l'autonomie de l'aéronef.

Le document US 2011/253832 A1 concerne un ensemble destiné à soutenir les becs sur le bord d'attaque d'une aile d'avion et qui est utilisé pour déployer et rétracter les becs de l'aile pour contrôler la portance pendant le vol.

### EXPOSÉ DE L'INVENTION

L'invention a donc pour but de remédier au moins partiellement à l'inconvénient mentionné ci-dessus, relatif aux réalisations de l'art antérieur.

Pour ce faire, l'invention a tout d'abord pour objet une aile d'aéronef comprenant un corps central fixe d'aile, ainsi qu'au moins un volet mobile de bord d'attaque destiné à être déplacé relativement audit corps central fixe entre une position déployée et une position rentrée, le corps central fixe d'aile comprenant un longeron avant délimitant un caisson de voilure à l'avant duquel se situe ledit volet mobile, ce dernier étant associé à au moins un dispositif de guidage permettant de le guider par rapport au corps central fixe d'aile.

Selon l'invention, le dispositif de guidage est agencé entièrement à l'avant du longeron avant du caisson de voilure, ce dispositif comportant les éléments suivants :
- un premier organe pivotant présentant une première extrémité reliée au longeron avant du caisson de voilure par une première liaison articulée ;
- un second organe pivotant relié à une seconde extrémité du premier organe pivotant par une seconde liaison articulée agencée entre une première et une seconde extrémité du second organe pivotant, la première extrémité de ce second organe pivotant étant reliée à un module de connexion du volet mobile par une troisième liaison articulée ; et
- un rail de guidage solidaire du longeron avant du caisson de voilure, le rail de guidage recevant un organe suiveur agencé à la seconde extrémité du second organe pivotant, le rail de guidage définissant une trajectoire s'inscrivant sur la surface d'une sphère fictive,
et les axes d'articulation des trois liaisons articulées convergent en un même point correspondant au centre de la sphère fictive.

L'invention apporte une solution permettant de confiner le dispositif de guidage du volet mobile à l'avant de l'aile, sans qu'aucun de ses composants n'ait à traverser le longeron avant du caisson de voilure. Avantageusement, le volume de ce caisson peut ainsi être davantage fonctionnalisé, par exemple pour stocker une quantité supérieure de carburant dans le caisson.

Pour aboutir à ce résultat, la solution proposée par l'invention contraste drastiquement avec les réalisations antérieures, puisque la conception du dispositif de guidage repose à présent sur l'utilisation d'organes pivotants et de liaisons articulées, dont les axes d'articulation convergent tous en un même point. A titre d'exemple indicatif, lorsque le mouvement du volet par rapport au corps central fixe de l'aile est une rotation ou bien comprend une rotation, ce point de convergence se trouve sur l'axe de cette rotation.

De manière plus générale, la solution apportée par l'invention permet de rendre le module de connexion mobile à la surface d'une sphère dont le centre est le point de convergence des axes d'articulation, tandis que la trajectoire de ce module est conditionnée par celle du rail de guidage. Par exemple, la trajectoire du rail de guidage peut être configurée de sorte que le déplacement incident du volet s'effectue dans un plan de déplacement parallèle à une direction de corde de l'aile, ou à une direction de vol de l'aéronef.

L'invention prévoit par ailleurs au moins l'une quelconque des caractéristiques optionnelles suivantes, prises isolément ou en combinaison.

Les premier et second organes pivotants sont des bras.

La seconde liaison articulée est agencée au niveau d'une zone médiane du second organe pivotant.

La première liaison articulée est réalisée à l'aide d'une ou plusieurs charnières.

L'organe suiveur est un système de galet porté par la seconde extrémité du second organe pivotant.

Le rail de guidage et la première liaison articulée sont espacés l'un de l'autre selon une direction d'envergure de l'aile. Cette particularité montre que la conception du dispositif de guidage est basée sur une occupation de l'espace selon la direction d'envergure, plutôt que sur l'utilisation d'éléments du type rails s'étendant selon la direction de corde de l'aile.

La trajectoire définie par le rail de guidage impose un déplacement de la troisième liaison articulée dans un plan de déplacement parallèle à une direction de corde de l'aile, et le mouvement du volet relativement au corps central fixe d'aile est une rotation selon un axe de rotation du volet passant par le point de convergence des axes d'articulation des trois liaisons articulées.

Alternativement, la trajectoire définie par le rail de guidage peut imposer un déplacement de la troisième liaison articulée dans un plan de déplacement parallèle à une direction de vol, cette solution étant préférentiellement retenue lorsque l'ensemble du volet est destiné à être déplacé parallèlement à la direction de vol.

D'autres déplacements sont néanmoins envisageables, sans sortir du cadre des revendications annexées.

L'aile comporte en outre, associé audit volet mobile de bord d'attaque, au moins un dispositif de mise en mouvement du volet mobile, le dispositif de mise en mouvement étant monté sur le corps central fixe d'aile.

Le dispositif de mise en mouvement présente une sortie montée sur le volet mobile de bord d'attaque.

Selon une alternative, le dispositif de mise en mouvement présente une sortie montée sur le premier organe pivotant ou sur le second organe pivotant du dispositif de guidage.

A titre d'exemple, le dispositif de mise en mouvement est un vérin.

Le dispositif de mise en mouvement est agencé entièrement à l'avant du longeron avant du caisson de voilure, en étant de préférence fixé sur ce longeron avant.

L'aile comporte de préférence, associés audit volet mobile de bord d'attaque, plusieurs dispositifs de mise en mouvement ainsi que plusieurs dispositifs de guidage.

Enfin, l'invention a également pour objet un aéronef comprenant au moins une aile telle que décrite ci-dessus, cette même aile étant préférentiellement équipée de plusieurs volets mobiles de bord d'attaque.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un aéronef;
- la figure 2 représente une vue schématique et partielle en coupe d'une aile d'aéronef selon la présente invention, munie d'un volet mobile de bord d'attaque ;
- la figure 3 représente une vue partielle en perspective du volet mobile de bord d'attaque montré sur la figure 2 et de son dispositif de guidage en rotation, le volet adoptant une position rentrée ;
- les figures 3a et 3b sont des vues en perspective similaires à celle de la figure 3, selon différents angles de vue ;
- la figure 3c représente une vue en perspective du système de guidage en rotation du volet, montré sur les figures 3 à 3b ;
- les figures 4 et 5 sont des vues en perspective similaires à celle de la figure 3a, avec le volet mobile représenté respectivement en position intermédiaire et en position déployée ;
- la figure 6 représente une vue partielle en perspective du volet mobile de bord d'attaque, de son dispositif de guidage en rotation, et de son dispositif de mise en mouvement couplé au dispositif de guidage ;
- les figures 7 à 9 montrent l'évolution du dispositif de guidage lors de l'actionnement du dispositif de mise en mouvement ;
- la figure 10 représente schématiquement les différentes directions selon lesquelles le volet mobile peut être déplacé ; et
- la figure 11 est une vue schématique d'une alternative de réalisation, dans laquelle le dispositif de guidage du volet est indépendant de son dispositif de mise en mouvement.

### EXPOSÉ DÉTAILLÉ DE MODES DE RÉALISATION PRÉFÉRÉS

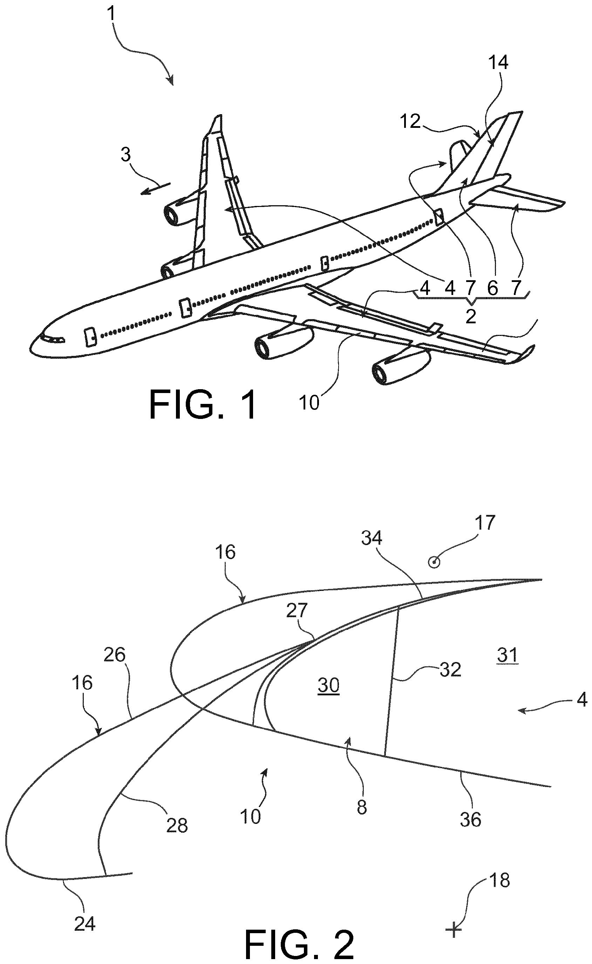

En référence tout d'abord à la figure 1, il est représenté un aéronef 1 disposant d'une voilure 2 constituée d'une pluralité d'éléments de voilure, encore appelés surfaces aérodynamiques portantes.

Dans toute la description qui va suivre, les termes « avant » et « arrière » sont à considérer par rapport à une direction d'avancement de l'aéronef rencontrée suite à la poussée exercée par les moteurs de l'aéronef, cette direction étant représentée schématiquement par la flèche 3, et également dénommée « direction de vol ».

Parmi les éléments de voilure de l'aéronef 1, il est prévu deux ailes principales, dites ailes 4, une dérive verticale 6, ainsi que deux empennages horizontaux 7 situés à l'arrière de cet aéronef.

En ce qui concerne les ailes 4, comme évoqué ci-dessus, celles-ci comprennent chacune un corps central fixe d'aile 8, également dénommé portion centrale principale, ce corps constituant quasiment l'intégralité de l'aile, et étant situé en arrière d'un bord d'attaque 10.

Comme le montre schématiquement la figure 2, c'est le bord d'attaque 10 de chacune des deux ailes 4 qui peut être équipé d'au moins un volet mobile de bord d'attaque 16, dit « *Slat* ». Chacun de ces volets 16 est destiné à être relié au corps 8 par des moyens qui seront détaillés ci-après. Sur cette figure 2, il est montré que le volet mobile de bord d'attaque 16 (représenté schématiquement) peut occuper une position rétractée/rentrée dans laquelle il affleure la partie avant du corps central fixe 8 de l'aile 4. Dans un tel cas, le volet mobile 16 se trouve dans sa position la plus arrière. De plus, le volet mobile 16 peut occuper une position entièrement déployée où il est à distance vers l'avant du corps central fixe 8, cette position entièrement déployée étant adoptée en particulier durant les phases de décollage et d'atterrissage afin d'augmenter la portance à faible ou moyenne vitesse. Ce volet 16 est bien entendu conçu pour être déplacé entre ces deux positions extrêmes, par exemple de manière à lui faire adopter une position intermédiaire de décollage, connue de l'homme du métier.

A titre indicatif, le volet mobile 16 s'étend par exemple sur sensiblement toute la longueur de l'aile 4 concernée, bien entendu selon la direction d'envergure 17 de cette aile 4, ou bien uniquement sur une portion seulement de cette aile, comme cela est le plus courant sur les aéronefs.

De façon connue, le volet 16 comporte un revêtement aérodynamique définissant une portion intrados 24 ainsi qu'une portion extrados 26, cette dernière se terminant par un bord de fuite 27 du volet. De plus, il est fermé vers l'arrière par un revêtement de fermeture 28, destiné à épouser le corps fixe d'aile 8 lorsqu'il occupe la position rentrée.

Ce corps fixe 8 présente un espace d'extrémité avant 30, situé devant un caisson de voilure 31 et délimité vers l'arrière par un longeron avant 32 de ce caisson. Le longeron avant s'étend parallèlement à la direction d'envergure 17, sur sensiblement toute la longueur de l'aile. Il forme ainsi le caisson de voilure 31 avec une peau d'extrados 34, une peau d'intrados 36, et un longeron arrière non visible sur la figure 2. Le caisson de voilure 31 apporte de manière classique une fonction structurale à l'aile, mais il peut également être au moins partiellement rempli de carburant.

Sur la figure 2, le volet mobile 16 est représenté dans ses deux positions rentrée et déployée. Le déplacement entre ces positions est opéré par un ou plusieurs dispositifs de mise en mouvement, tandis que la trajectoire de ce déplacement est imposée par un ou plusieurs dispositifs de guidage permettant ici la simple mise en rotation du volet 16, relativement au corps central fixe 8, selon un axe de rotation 18. Des mouvements du volet plus complexes peuvent être envisagés, par exemple des mouvements comportant une telle rotation, sans sortir du cadre des revendications annexées. Néanmoins, comme indiqué ci-dessus, le mode de réalisation préféré qui va être décrit concerne un simple mouvement de rotation du volet entre ses deux positions extrêmes, ce mouvement étant préférentiellement adopté lorsque le volet est déplacé orthogonalement à une direction de corde de l'aile.

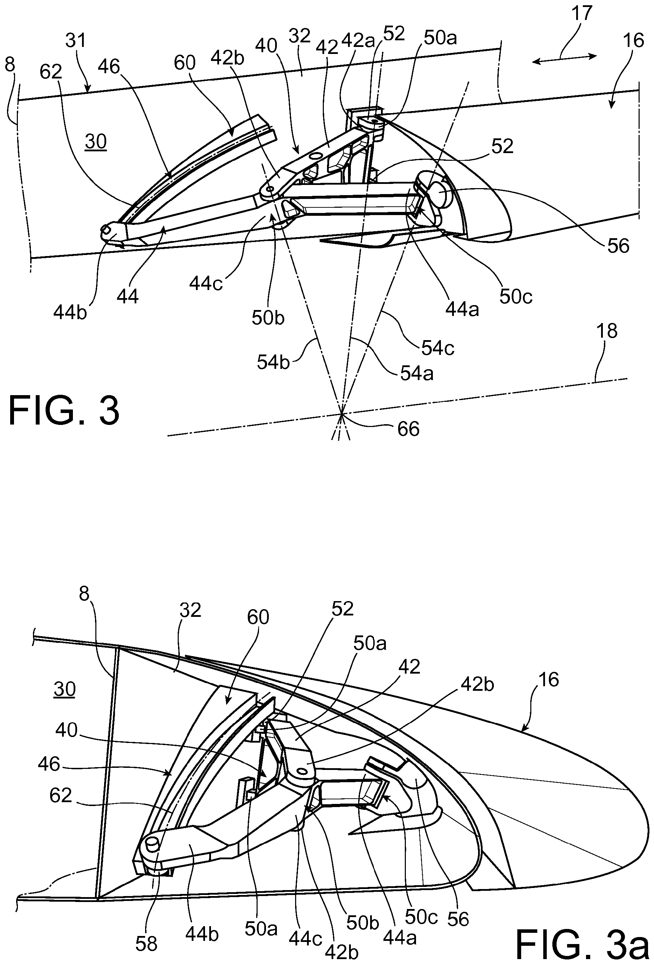

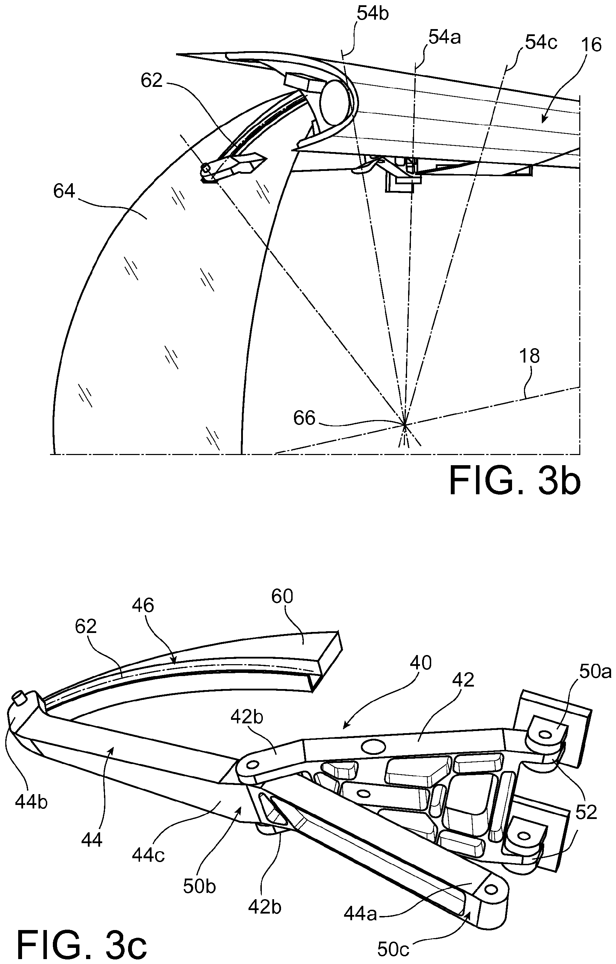

A présent, c'est l'un de ces dispositifs de guidage 40, permettant un tel mouvement, qui va être décrit en référence aux figures 3 à 3c.

Tout d'abord, le dispositif de guidage 40 présente la particularité d'être agencé entièrement à l'avant du longeron avant 32, en restant confiné dans l'espace d'extrémité avant 30 du corps central fixe 8 lorsque le volet adopte sa position rentrée. Aucun élément de ce dispositif 40 ne traverse donc le longeron avant 32 vers l'arrière, et ce quelle que soit la position du volet mobile 16. Le volume du caisson de voilure 31 peut ainsi être optimisé, puisqu'aucun élément du dispositif de guidage 40 ne pénètre en son sein.

Le dispositif de guidage 40 comporte essentiellement trois éléments, à savoir un premier organe pivotant 42 en forme de bras, un second organe pivotant 44 en forme de bras, ainsi qu'un rail de guidage 46.

Plus précisément, le premier bras pivotant 42 présente une première extrémité 42a ainsi qu'une seconde extrémité 42b opposée à la première. La première extrémité 42a est reliée à une face avant du longeron avant 32 par une première liaison articulée 50a, qui est réalisée à l'aide de plusieurs charnières 52. Cette première liaison articulée 50a définit un premier axe d'articulation 54a le long duquel se succèdent les différentes charnières 52, ici prévues au nombre de deux. La fixation de la base des charnières 52 s'effectue de manière classique sur la face avant du longeron avant 32, par exemple à l'aide d'une chape fixée par des boulons ou des éléments similaires.

À sa seconde extrémité 42b en forme de chape, le premier bras pivotant 42 est relié à une zone médiane 44c du second bras pivotant 44, par l'intermédiaire d'une second liaison articulée 50b. Celle-ci se situe encore plus préférentiellement sur ou à proximité d'un centre de ce bras 44. Elle définit un second axe d'articulation 54b traversant les deux oreilles de chape.

Le premier bras 42 est de préférence sensiblement plan, éventuellement évidé dans certaines parties, laissant ainsi apparaitre des renforts.

Le second bras pivotant 44 présente lui aussi une première extrémité 44a ainsi qu'une seconde extrémité 44b opposée à la première, ces deux extrémités étant agencées de part et d'autre de la zone médiane 44c. La première extrémité 44a est reliée à un module de connexion 56 du volet 16. Ici, le module est conventionnel, à savoir qu'il est fixé sur la structure du volet 16. Le module 56 peut intégrer, de manière connue, un système à excentrique permettant de régler la position du bord de fuite du volet 16. Il permet aussi de reprendre les dilatations différentielles du volet 16 dans la direction d'envergure. Le montage de la première extrémité 44a sur le module de connexion 56 s'effectue par l'intermédiaire d'une troisième liaison articulée 50c, définissant un troisième axe d'articulation 54c. En d'autres termes, le module de connexion 56 est ici considéré comme formant une partie de la troisième liaison articulée, ou bien comme solidaire de cette même partie de la liaison.

Le second bras 44 peut présenter une forme plus effilée que celle du premier bras. Il n'est pas nécessairement droit, mais peut présenter au niveau de la seconde liaison 50b un coude de quelques degrés.

À sa seconde extrémité 44b, le second bras pivotant 44 porte un organe suiveur en forme de galet 58, visible sur la figure 3a. Ce galet 58 est monté pivotant selon son propre axe, à l'extrémité 44b du second bras 44. Il coopère avec le rail de guidage 46, dans lequel il est logé de manière mobile. Des moyens spécifiques (non représentés) peuvent être mis en œuvre pour interdire au galet 58 de sortir du rail, en forme de rainure.

Le rail de guidage 46 est défini par une structure 60 fixée sur la face avant du longeron avant 32, et espacée de la première liaison 50a selon la direction d'envergure 17. Ici également, la fixation de la structure 60 s'effectue de manière classique sur la face avant du longeron avant 32, par exemple à l'aide d'une chape fixée par des boulons ou des éléments similaires. Le rail de guidage 46 définit une trajectoire 62 pour le galet 58, cette trajectoire s'étendant globalement le long de la face avant du longeron avant 32 du caisson de voilure 31. Plus précisément, cette trajectoire 62 s'inscrit sur la surface d'une sphère fictive 64 schématisée sur la figure 3b. Cette sphère 64 présente un centre 66 au niveau duquel convergent les trois axes d'articulation 54a, 54b, 54c. Ce point de convergence 66 se situe sur l'axe de rotation 18 du volet mobile, de manière à permettre le déplacement rotatif de ce dernier. Ce déplacement du volet est donc conditionné par la trajectoire 62 définie par le rail de guidage 46, dont la forme peut-être un arc de cercle, ou plus préférentiellement une ligne plus complexe s'inscrivant toujours sur la sphère fictive 64.

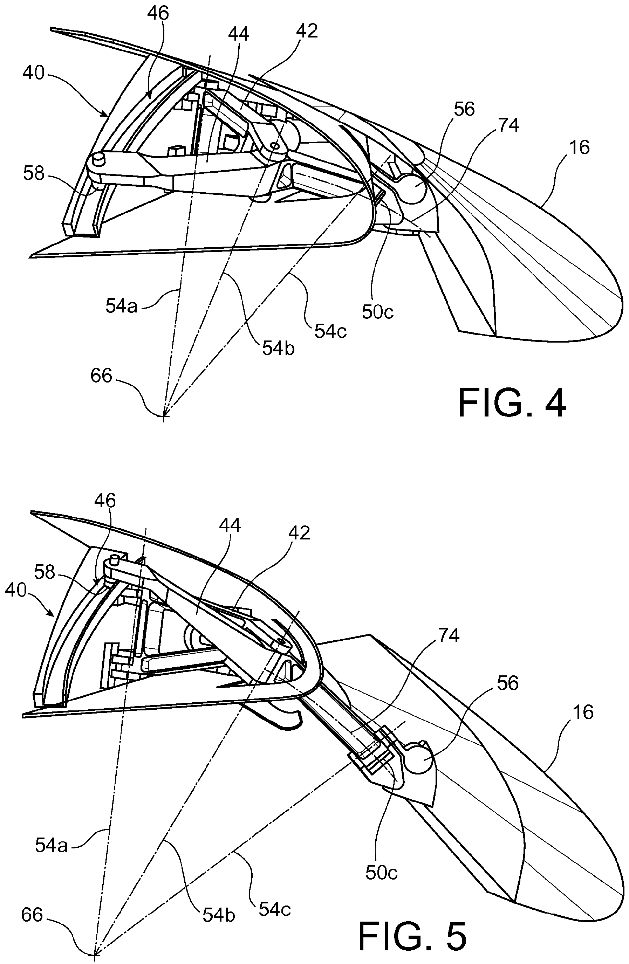

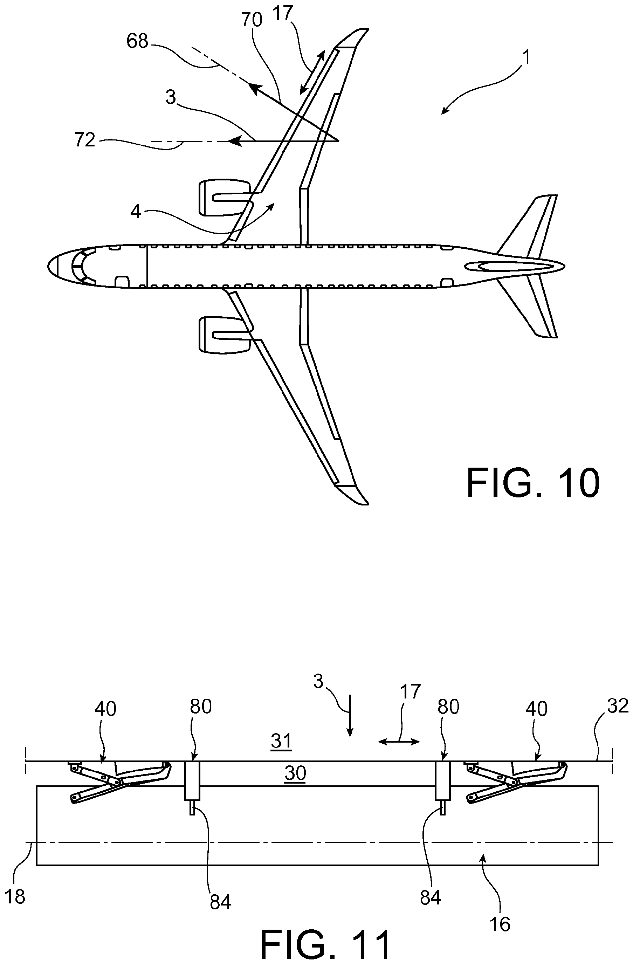

La trajectoire 62 du rail de guidage 46 permet par exemple d'imposer, à la troisième liaison articulée 50c, au module de connexion 56 et à l'ensemble du volet 16, un déplacement selon une trajectoire en arc de cercle s'inscrivant dans un plan de déplacement 68 schématisé sur la figure 10, parallèle à la direction de corde 70. Ce plan de déplacement 68 est alors orthogonal à la direction d'envergure 17, et de préférence également orthogonal au longeron avant du caisson de voilure. A cet égard, il est noté que la trajectoire en arc de cercle 74 de la troisième liaison articulée 50c a également été schématisée sur les figures 4 et 5, montrant le dispositif de guidage 40 dans deux états différents lors du déploiement du volet. Sur ces figures, il peut notamment être aperçu que le galet 58 se déplace dans le rail de guidage 46 pendant le déploiement du volet. Cela permet d'imposer la trajectoire en arc de cercle à la troisième liaison articulée 50c, qui, dans ce mode de réalisation, est assimilable à un élément de sortie du dispositif de guidage 40, relié au module de connexion 56.

Comme évoqué précédemment, d'autres mouvements du volet mobile sont aussi possibles avec la présente invention. La trajectoire 62 du rail de guidage 46 peut ainsi imposer un déplacement de la troisième liaison articulée 50c dans un plan de déplacement 72 schématisé sur la figure 10, parallèle à la direction de vol 3. Ce déplacement de la troisième liaison articulée 50c est alors préférentiellement une trajectoire en arc de cercle s'inscrivant dans le plan 72, selon un axe de rotation (non représenté) passant par le point de convergence 66 et sensiblement orthogonal à la direction de vol 3. Cette solution est préférentiellement retenue lorsque l'ensemble du volet est destiné à être déplacé parallèlement à la direction de vol 3. A cet égard, il est noté que dans ce dernier cas de figure, et éventuellement pour des déplacements de volet de natures encore différentes, le module de connexion peut être équipé d'un ou plusieurs degrés de liberté supplémentaires, essentiellement dans le but de limiter les risques de coincement du volet lors de son déplacement. Il s'agit de préférence de degrés de liberté de rotation, prévus entre plusieurs pièces distinctes de ce module de connexion 56.

Enfin, il est noté qu'en plus de permettre le guidage en rotation du volet 16 par rapport au corps principal fixe 8, le dispositif 40 permet également de supporter ce volet, et de transmettre les efforts aérodynamiques subis par ce dernier en direction du longeron avant 32 du caisson de voilure 31.

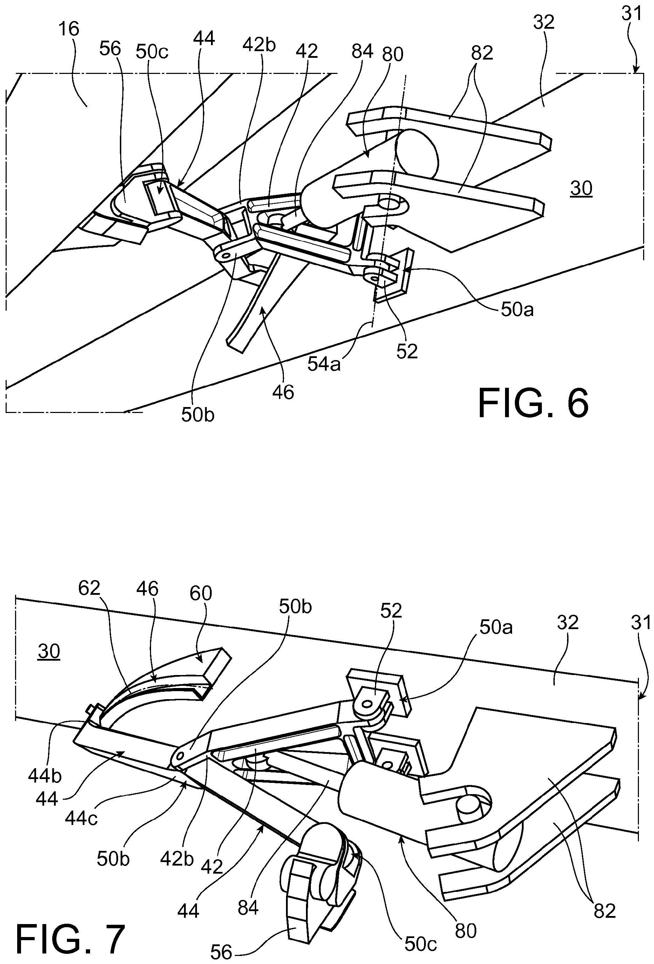

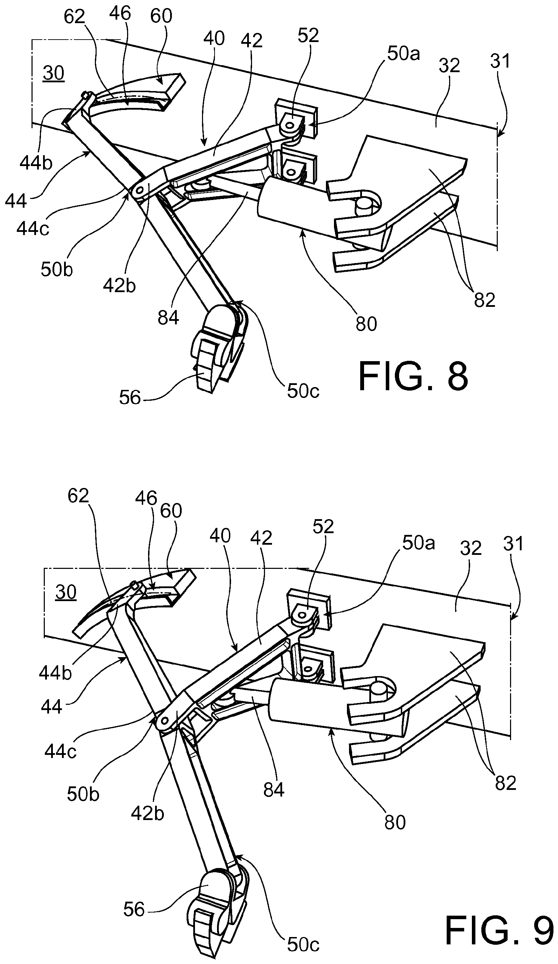

En référence à présent aux figures 6 à 9, il est montré un mode de réalisation préférée dans lequel un dispositif de mise en mouvement 80 du volet coopère avec le dispositif de guidage 40. Il s'agit de préférence d'un vérin monté articulé à l'une de ses extrémités sur le longeron avant 32, via une ou plusieurs ferrures 82 solidaires de ce même longeron. À son extrémité opposée, correspondant à la tige de sortie de vérin 84, celle-ci est montée articulée sur le premier bras pivotant 42, à proximité de sa seconde extrémité 42b. Les deux axes d'articulation du vérin 80 sont de préférence parallèles entre eux, et de préférence également parallèles au premier axe d'articulation 54a de la première liaison articulée 50a. Toujours pour optimiser les fonctionnalités du caisson de voilure 31, le vérin 80 se situe entièrement à l'avant le longeron avant 32, en restant confiné dans l'espace d'extrémité avant 30 du corps central fixe 8 lorsque le volet adopte sa position rentrée.

Il est noté que les deux dispositifs 40, 80 forment ici un ensemble permettant le support, le guidage, et la mise en mouvement du volet mobile 16 par rapport au corps central fixe d'aile 8. Un ou plusieurs de ces ensembles, de préférence de conception identique, peuvent être associés à un même volet mobile 16, en étant espacés les uns des autres selon la direction d'envergure 17. Dans ce cas particulier d'un déplacement du volet 16 selon une direction orthogonale à la direction de corde 70, les axes de rotation associés à chacun des ensembles sont confondus. Alternativement, pour d'autres types de déplacements du volet, par exemple parallèlement à la direction de vol 3, les axes de rotation définis par chacun des ensembles ne sont pas nécessairement confondus, mais peuvent par exemple être parallèles entre eux. Dans ce même exemple d'un déplacement du volet parallèlement à la direction de vol, les axes de rotation précités sont alors préférentiellement orthogonaux à la direction de vol.

Selon une alternative de réalisation montrée sur la figure 11, les dispositifs de guidage 40 et les dispositifs de mise en mouvement 80 sont indépendants. En d'autres termes, les dispositifs de mise en mouvement 80, de préférence ici aussi en forme de vérins, ne coopèrent plus avec les dispositifs de guidage 40 mais présentent une tige de sortie 84 directement montée sur le volet mobile 16. Dans cette alternative, l'articulation du vérin 80 sur le longeron avant 32 et sur le volet 16 s'effectue via des axes d'articulation qui sont préférentiellement parallèles à l'axe de rotation 18 de ce volet. Par exemple, il est prévu deux dispositifs de mise en mouvement 80, ainsi que deux dispositifs de guidage 40, chacun agencé proche de l'un des dispositifs 80 selon la direction d'envergure 17.

Bien entendu, diverses modifications peuvent être apportées par l'homme du métier à l'invention qui vient d'être décrite, uniquement à titre d'exemples non limitatifs. La portée de l'invention est définie par les revendications annexées.

## Revendications

1. Aile d'aéronef (4) comprenant un corps central fixe d'aile (8), ainsi qu'au moins un volet mobile de bord d'attaque (16) destiné à être déplacé relativement audit corps central fixe entre une position déployée et une position rentrée, le corps central fixe d'aile (8) comprenant un longeron avant (32) délimitant un caisson de voilure (31) à l'avant duquel se situe ledit volet mobile, ce dernier étant associé à au moins un dispositif de guidage (40) permettant de le guider par rapport au corps central fixe d'aile (8), le dispositif de guidage (40) étant agencé entièrement à l'avant du longeron avant (32) du caisson de voilure, ce dispositif comportant les éléments suivants :
- un premier organe pivotant (42) présentant une première extrémité (42a) reliée au longeron avant (32) du caisson de voilure par une première liaison articulée (50a) ;
- un second organe pivotant (44) relié à une seconde extrémité (42b) du premier organe pivotant (42) par une seconde liaison articulée (50b) agencée entre une première et une seconde extrémité (44a, 44b) du second organe pivotant, la première extrémité (44a) de ce second organe pivotant étant reliée à un module de connexion (56) du volet mobile (16) par une troisième liaison articulée (50c) ; et
- un rail de guidage (46) solidaire du longeron avant (32) du caisson de voilure, le rail de guidage recevant un organe suiveur (58) agencé à la seconde extrémité (44b) du second organe pivotant (44), **caractérisée en ce que** le rail de guidage définit une trajectoire (62) s'inscrivant sur la surface d'une sphère fictive (64),
et **en ce que** les axes d'articulation (54, 54b, 54c) des trois liaisons articulées convergent en un même point (66) correspondant au centre de la sphère fictive (64).

2. Aile selon la revendication 1, **caractérisée en ce que** les premier et second organes pivotants (42, 44) sont des bras.

3. Aile selon la revendication 1 ou la revendication 2, **caractérisée en ce que** la seconde liaison articulée (50b) est agencée au niveau d'une zone médiane (44c) du second organe pivotant (44).

4. Aile selon l'une quelconque des revendications précédentes, **caractérisée en ce que** la première liaison articulée (50a) est réalisée à l'aide d'une ou plusieurs charnières (52).

5. Aile selon l'une quelconque des revendications précédentes, **caractérisée en ce que** l'organe suiveur (58) est un système de galet porté par la seconde extrémité (44b) du second organe pivotant (44).

6. Aile selon l'une quelconque des revendications précédentes, **caractérisée en ce que** le rail de guidage (46) et la première liaison articulée (50c) sont espacés l'un de l'autre selon une direction d'envergure (17) de l'aile.

7. Aile selon l'une quelconque des revendications précédentes, **caractérisée en ce que** la trajectoire (62) définie par le rail de guidage (46) impose un déplacement de la troisième liaison articulée (50c) dans un plan de déplacement (68) parallèle à une direction de corde (70) de l'aile, et **en ce que** le mouvement du volet relativement au corps central fixe d'aile est une rotation selon un axe de rotation (18) du volet passant par le point de convergence (66) des axes d'articulation (54, 54b, 54c) des trois liaisons articulées.

8. Aile selon l'une quelconque des revendications 1 à 6, **caractérisée en ce que** la trajectoire (62) définie par le rail de guidage (46) impose un déplacement de la troisième liaison articulée (50c) dans un plan de déplacement (72) parallèle à une direction de vol (3).

9. Aile selon l'une quelconque des revendications précédentes, **caractérisée en ce qu'**elle comporte en outre, associé audit volet mobile de bord d'attaque (16), au moins un dispositif de mise en mouvement (80) du volet mobile, le dispositif de mise en mouvement étant monté sur le corps central fixe d'aile (8).

10. Aile selon la revendication 9, **caractérisée en ce que** le dispositif de mise en mouvement (80) présente une sortie (84) montée sur le volet mobile de bord d'attaque (16), ou présente une sortie (84) montée sur le premier organe pivotant (42), ou sur le second organe pivotant (44) du dispositif de guidage (40).

11. Aile selon l'une quelconque des revendications 9 et 10, **caractérisée en ce que** le dispositif de mise en mouvement (80) est un vérin.

12. Aile selon l'une quelconque des revendications 9 à 11, **caractérisée en ce que** le dispositif de mise en mouvement (80) est agencé entièrement à l'avant du longeron avant (32) du caisson de voilure (31), en étant de préférence fixé sur ce longeron avant.

13. Aile selon l'une quelconque des revendications 9 à 12, **caractérisée en ce qu'**elle comporte, associés audit volet mobile de bord d'attaque (16), plusieurs dispositifs de mise en mouvement (80) ainsi que plusieurs dispositifs de guidage (40).

## Patentansprüche

1. Flugzeugflügel (4), umfassend einen feststehenden mittleren Flügelkörper (8) sowie mindestens eine bewegliche Vorderkantenklappe (16), die dazu bestimmt ist, bezüglich des feststehenden mittleren Körpers zwischen einer ausgebrachten Position und einer eingezogenen Position bewegt zu werden, wobei der feststehende mittlere Flügelkörper (8) einen vorderen Holm (32) umfasst, der einen Tragwerkkasten (31) begrenzt, vor dem sich die bewegliche Klappe befindet, wobei Letztere mindestens einer Führungsvorrichtung (40) zugeordnet ist, dank derer sie bezüglich des feststehenden mittleren Flügelkörpers (8) geführt werden kann,
wobei die Führungsvorrichtung (40) gänzlich vor dem vorderen Holm (32) des Tragwerkkastens angeordnet ist, wobei diese Vorrichtung die folgenden Elemente aufweist:
- ein erstes Schwenkglied (42), das ein erstes Ende (42a) aufweist, das durch eine erste Gelenkverbindung (50a) mit dem vorderen Holm (32) des Tragwerkkastens verbunden ist,
- ein zweites Schwenkglied (44), das durch eine zweite Gelenkverbindung (50b), die zwischen einem ersten und einem zweiten Ende (44a, 44b) des zweiten Schwenkglieds angeordnet ist, mit einem zweiten Ende (42b) des ersten Schwenkglieds (42) verbunden ist, wobei das erste Ende (44a) dieses zweiten Schwenkglieds durch eine dritte Gelenkverbindung (50c) mit einem Verbindungsmodul (56) der beweglichen Klappe (16) verbunden ist, und
- eine Führungsschiene (46), die fest mit dem vorderen Holm (32) des Tragwerkkastens verbunden ist, wobei die Führungsschiene ein Nachführglied (58) aufnimmt, das an dem zweiten Ende (44b) des zweiten Schwenkglieds (44) angeordnet ist, **dadurch gekennzeichnet, dass** die Führungsschiene eine Bahn (62) definiert, die auf der Oberfläche einer fiktiven Kugel (64) liegt,
und dass die Gelenkachsen (54, 54b, 54c) der drei Gelenkverbindungen in ein und demselben Punkt (66) konvergieren, der der Mitte der fiktiven Kugel (64) entspricht.

2. Flügel nach Anspruch 1, **dadurch gekennzeichnet, dass** das erste und das zweite Schwenkglied (42, 44) Arme sind.

3. Flügel nach Anspruch 1 oder Anspruch 2, **dadurch gekennzeichnet, dass** die zweite Gelenkverbindung (50b) auf der Höhe einer mittleren Zone (44c) des zweiten Schwenkglieds (44) angeordnet ist.

4. Flügel nach einem der vorhergehenden Ansprüche, **dadurch gekennzeichnet, dass** die erste Gelenkverbindung (50a) mit Hilfe eines oder mehrerer Scharniere (52) ausgeführt ist.

5. Flügel nach einem der vorhergehenden Ansprüche, **dadurch gekennzeichnet, dass** das Nachführglied (58) ein von dem zweiten Ende (44b) des zweiten Schwenkglieds (44) getragenes Rollensystem ist.

6. Flügel nach einem der vorhergehenden Ansprüche, **dadurch gekennzeichnet, dass** die Führungsschiene (46) und die erste Gelenkverbindung (50c) in einer Flügelspannweitenrichtung (17) voneinander beabstandet sind.

7. Flügel nach einem der vorhergehenden Ansprüche, **dadurch gekennzeichnet, dass** die durch die Führungsschiene (46) definierte Bahn (62) eine Bewegung der dritten Gelenkverbindung (50c) in einer parallel zu einer Sehnenrichtung (70) des Flügels verlaufenden Bewegungsebene (68) bestimmt und dass die Bewegung der Klappe bezüglich des feststehenden mittleren Flügelkörpers eine Drehung gemäß einer Rotationsachse (18) der Klappe ist, die durch den Konvergenzpunkt (66) der Gelenkachsen (54, 54b, 54c) der drei Gelenkverbindungen geht.

8. Flügel nach einem der Ansprüche 1 bis 6, **dadurch gekennzeichnet, dass** die durch die Führungsschiene (46) definierte Bahn (62) eine Bewegung der dritten Gelenkverbindung (50c) in einer parallel zu einer Flugrichtung (3) verlaufenden Bewegungsebene (72) bestimmt.

9. Flügel nach einem der vorhergehenden Ansprüche, **dadurch gekennzeichnet, dass** er ferner mindestens eine der beweglichen Vorderkantenklappe (16) zugeordnete Vorrichtung (80) zum Inbewegungsetzen der beweglichen Klappe aufweist, wobei die Vorrichtung zum Inbewegungsetzen an dem feststehenden mittleren Flügelkörper (8) montiert ist.

10. Flügel nach Anspruch 9, **dadurch gekennzeichnet, dass** die Vorrichtung (80) zum Inbewegungsetzen eine Ausgangsstange (84) aufweist, die an der beweglichen Vorderkantenklappe (16) montiert ist, oder eine Ausgangsstange (84) aufweist, die an dem ersten Schwenkglied (42) oder an dem zweiten Schwenkglied (44) der Führungsvorrichtung (40) montiert ist.

11. Flügel nach einem der Ansprüche 9 und 10, **dadurch gekennzeichnet, dass** die Vorrichtung (80) zum Inbewegungsetzen ein Zylinder ist.

12. Flügel nach einem der Ansprüche 9 bis 11, **dadurch gekennzeichnet, dass** die Vorrichtung (80) zum Inbewegungsetzen gänzlich vor dem vorderen Holm (32) des Tragwerkkastens (31) angeordnet ist, indem sie vorzugsweise an diesem vorderen Holm befestigt ist.

13. Flügel nach einem der Ansprüche 9 bis 12, **dadurch gekennzeichnet, dass** er mehrere Vorrichtungen (80) zum Inbewegungsetzen sowie mehrere Führungsvorrichtungen (40) aufweist, die der beweglichen Vorderkantenklappe (16) zugeordnet sind.

## Claims

1. An aircraft wing (4) comprising a fixed wing centre body (8), as well as at least one mobile leading edge flap (16) for being moved relative to said fixed centre body between an extended position and a retracted position, the fixed wing centre body (8) comprising a front spar (32) delimiting a wing box (31) at the front of which said mobile flap is located, the latter being associated with at least one guiding device (40) for guiding it with respect to the fixed wing centre body (8),
the guiding device (40) being totally arranged at the front of the front spar (32) of the wing box, this device including the following elements:
- a first pivoting member (42) having a first end (42a) connected to the front spar (32) of the wing box through a first hinged connection (50a);
- a second pivoting member (44) connected to a second end (42b) of the first pivoting member (42) through a second hinged connection (50b) arranged between a first and a second end (44a, 44b) of the second pivoting member, the first end (44a) of this second pivoting member being connected to a module (56) for connecting the mobile flap (16) through a third hinged connection (50c); and
- a guiding rail (46) integral with the front spar (32) of the wing box, the guiding rail receiving a follower member (58) arranged at the second end (44b) of the second pivoting member (44), **characterized in that** the guiding rail defines a trajectory (62) lying on the surface of a dummy sphere (64),
and **in that** the hinging axes (54, 54b, 54c) of the three hinged connections converge to a same point (66) corresponding to the centre of the dummy sphere (64).

2. The wing according to claim 1, **characterised in that** the first and second pivoting members (42, 44) are arms.

3. The wing according to claim 1 or claim 2, **characterised in that** the second hinged connection (50b) is arranged at a median zone (44c) of the second pivoting member (44).

4. The wing according to any of the previous claims, **characterised in that** the first hinged connection (50a) is made using one or more hinges (52).

5. The wing according to any of the previous claims, **characterised in that** the follower member (58) is a roller system carried by the second end (44b) of the second pivoting member (44).

6. The wing according to any of the previous claims, **characterised in that** the guiding rail (46) and the first hinged connection (50c) are spaced apart from each other along a span direction (17) of the wing.

7. The wing according to any of the previous claims, **characterised in that** the trajectory (62) defined by the guiding rail (46) requires a movement of the third hinged connection (50c) in a movement plane (68) parallel to a chord direction (70) of the wing, and **in that** the motion of the flap relative to the wing fixed centre body is a rotation along a rotational axis (18) of the flap passing through the point of convergence (66) of the hinging axes (54, 54b, 54c) of the three hinged connections.

8. The wing according to any of claims 1 to 6, **characterised in that** the trajectory (62) defined by the guiding rail (46) requires a movement of the third hinged connection (50c) in a movement plane (72) parallel to a flight direction (3).

9. The wing according to any of the previous claims, **characterised in that** it further includes, being associated with said mobile leading edge flap (16), at least one device (80) for moving the mobile flap, the moving device being mounted to the wing fixed centre body (8).

10. The wing according to claim 9, **characterised in that** the moving device (80) has an outlet (84) mounted to the mobile leading edge flap (16), or has an outlet (84) mounted to the first pivoting member (42), or to the second pivoting member (44) of the guiding device (40).

11. The wing according to any of claims 9 and 10, **characterised in that** the moving device (80) is a cylinder.

12. The wing according to any of claims 9 to 11, **characterised in that** the moving device (80) is totally arranged at the front of the front spar (32) of the wing box (31), preferably by being fastened to this front spar.

13. The wing according to any of claims 9 to 12, **characterised in that** it includes, being associated with said mobile leading edge flap (16), several moving devices (80) as well as several guiding devices (40).
